Europäisches Patentamt

European Patent Office

Office européen des brevets

(19)

(11) Publication number : **0 606 998 A1**

# (12) EUROPEAN PATENT APPLICATION

(21) Application number : 94300138.8

(22) Date of filing : 10.01.94

(51) Int. Cl.⁵ : **A01N 37/02,** A01N 37/06, // (A01N37/02, 25:24, 25:02), (A01N37/06, 25:24, 25:02)

(30) Priority : 14.01.93 JP 4796/93

(43) Date of publication of application :
20.07.94 Bulletin 94/29

(84) Designated Contracting States :
AT BE CH DE DK ES FR GB GR IE IT LI LU MC
NL PT SE

(71) Applicant : JAPAN TOBACCO INC.
12-16, Higashi Shinagawa 4-chome,
Shinagawa-ku, Tokyo 140 (JP)

(71) Applicant : MYCOGEN CORPORATION
4890 Carroll Canyon Road
San Diego, California 92121 (US)

(72) Inventor : Kamioka, Osamu
6-2 Umegaoka
Midori-ku, Kanagawa 227 (JP)
Inventor : Tanabe, Yoko
6-2 Umegaoka
Midori-ku, Kanagawa 227 (JP)
Inventor : Fukahara, Yoko
6-2 Umegaoka
Midori-ku, Kanagawa 227 (JP)
Inventor : Tsujino, Tasuko
6-2 Umegaoka
Midori-ku, Kanagawa 227 (JP)

(74) Representative : Perry, Robert Edward
GILL JENNINGS & EVERY
Broadgate House
7 Eldon Street
London EC2M 7LH (GB)

(54) Fatty acid type herbicidal composition.

(57) An improved fatty acid type herbicidal composition is provided, which can show not only high herbicidal activities at low application dosage but also sufficient weed control effect without causing environmental pollution. The fatty acid type herbicidal composition comprises a fatty acid type herbicide containing as an active ingredient a fatty acid having a carbon number of from 6 to 18 and at least one highly viscous substance. The highly viscous substance may be one selected from sucrose fatty acid esters and water-soluble polymers.

EP 0 606 998 A1

Jouve, 18, rue Saint-Denis, 75001 PARIS

## BACKGROUND OF THE INVENTION

### Field of the Invention

The present invention relates to an effect-enhancing agent for fatty acid type herbicides and a herbicidal composition comprising the agent.

### Related Background Art

Conventional chemical herbicides have been making a contribution to effective weed control widely and generally in the whole field of agriculture. With use of such chemical herbicides, sequential contamination appears outstanding because of their various toxicities even though these chemical herbicides have especially high herbicidal effects. The toxicity starts contaminating soil in fields, then flows into rivers, lakes and marshes, and seas, and goes into livestock and humans through contaminated food, e.g., plants or fish, and drinking water. One reason for the contamination is that the chemical herbicides are slowly decomposed in nature and can remain for a long period of time, in some cases one to three years or longer.

The fact of chemical herbicide contamination increases an earnest desire for developing a herbicide which selectively acts on a specific type of plant or which can be quickly decomposed after application its so as to leave no residual toxicity. Presently, there is no chemical herbicide product commercially available which satisfies both such conditions. Among the variety of chemical herbicides presently used, fatty acid type herbicides are known to decompose in soil relatively quickly after acting on a weed.

Conventionally popular fatty acid type herbicides under practical use, mainly in orchards or in forests, are halogen-substituted products of lower fatty acids having 2 to 3 carbon atoms. Such herbicides are characterized by their short onset of killing effect, but have limited use because they must be applied in a high doses and give a strong stimulus to the skin.

There are also known fatty acid type herbicides containing an active ingredient which is selected from straight chain carbonic acids, or their salts, having 6 to 12 carbons which are superior over other herbicides by their rapid onset of herbicidal effects. Their killing action browns the plant tissue as if leaf faces of weed were momentarily dissolved, resulting in the death of the weed in a short time. Therefore, the herbicides of this type have ideal non-selective herbicidal activities.

The fatty acid type herbicides containing an effective component of such straight chain fatty acid are widely used especially in the North America for agricultural fields except for paddy fields, non-agricultural fields, or private gardens. It was found that the desired effects of the herbicides could not be fully attained upon application of the herbicide during certain growth stages of the target weed. In that case, the application dosage was increased or the number of applications was increased. For example, it was normal in order to maintain the weed control effects that the herbicides were prepared at a concentration about 10 times higher than a preparation of other herbicides.

In addition, such fatty acid type herbicides can require frequent application dosage for effective weed control. This can raise problems such as high costs, difficulties in transportation, excessive application dosage, etc. which inevitably causes problems of environmental contamination similar to the contamination problems caused by the other fatty acid type herbicides.

### Summary of the Invention

Nevertheless, since the latter type of fatty acid herbicides show rapid and extremely high herbicidal activities and have the advantageous properties of being relatively quickly decomposed in soil, as described above, there has been a strong desire to develop a method for controlling weeds using low application does of the fatty acid herbicides while effectively utilizing the advantageous properties of the latter type of fatty acid herbicides.

Under the circumstances, it is an object of the present invention to provide a fatty acid type herbicidal composition as improved to show high killing effects with low application dosage resulting in sufficient weed control without causing environmental pollution.

To accomplish the above object, the present inventors have conducted extensive and intensive studies. As a result, it has been found that a fatty acid type herbicidal composition could be provided with stable herbicidal activities and effective weed control at a low dosage application by mixing therewith a substance having a high viscosity, e.g., sucrose fatty acid esters or water-soluble polymers. The present invention is based on the above finding.

Namely, the present invention provides a fatty acid type herbicidal composition, which comprises a fatty acid type herbicide containing a fatty acid having a carbon number of from 6 to 18 as an active ingredient and a highly viscous substance. The highly viscous substance can be one or two or more selected from sucrose fatty acid esters and water-soluble polymers.

Detailed Description of the Invention

A herbicide containing a straight chain fatty acid as an active ingredient can be used as the fatty acid herbicide in the fatty acid type herbicidal composition of the present invention. Among them, a straight chain fatty acid having a carbon number of from 6 to 18, for example, caproic acid, caprylic acid, pelargonic acid, capric acid, undecanoic acid, lauric acid, undecylenic acid, sebacic acid, oleic acid, linoleic acid and linolenic acid, can be used. Particularly preferred is a fatty acid type herbicide containing pelargonic acid as an active ingredient.

In the fatty acid type herbicidal composition according to the present invention, a highly viscous substance, for example, a sucrose fatty acid ester or a water-soluble polymer, can be used in combination with the fatty acid type herbicide, as described above.

As the sucrose fatty acid ester, various kinds of products different in the type of fatty acid or in the degree of esterification are commercially available, and all of them can be used in the present invention. They can be used alone or used in the form of preparations. The sucrose fatty acid ester can be mixed in a preparation of the fatty acid type herbicide or can be added to a diluent for the herbicide *in situ* before application. In case the sucrose fatty acid ester is mixed in a preparation, its amount can be at least about 0.1%, and not more than about 50% from the viewpoint of costs or physicochemical stability of the preparations. Further, when added to a diluent, they can be used at a concentration of at least about 0.05% (w/v) in the diluent for application, and preferably in the range of from about 0.05% to about 7% (w/v) from the viewpoint of stability of the diluent for application.

As the water-soluble polymer used for the fatty acid type herbicidal composition according to the present invention, those widely used in the fields of general manufacturing industries such as food industries, paper industries, pharmaceutical industries, cosmetic industries and the like can be used. Such water-soluble polymers can be generally classified into water-soluble naturally-occurring polymers and water-soluble synthetic polymers, either of which can be employed in the present invention.

The water-soluble naturally-occurring polymers are produced by animals, plants, or microorganisms, which are widely distributed as proteins or polysaccharides. For example, they can include starches, e.g., corn starch, sugarcane starch, tapioca starch, potato starch and rice starch; viscous substances derived from sea weed, e.g., carrageenan, glue plant (funori), agar, and sodium alginate; viscous substances derived from plants, e.g., gum arabic, gum tragacanth, maniok-eibish (Hibiscus manihot L.), konjak (Amorphophallus konjak K. Koch), and liquid-state mulukhiya; viscous substances derived from animals, e.g., animal glue, casein, gelatin, egg white and plasma protein; and polymers produced by microorganisms, e.g., xanthan gum, pullulan and dextran.

The water-soluble synthetic polymers can be further classified into semisynthetic polymers and synthetic polymers. As the semisynthetic polymers, there can be listed, for example, starch derivatives including carboxymethyl starch (CMS), British gum and dextrine, and cellulose derivatives, e.g., methyl cellulose (MC), carboxymethyl cellulose (CMC), and hydroxyethyl cellulose (HEC). As the synthetic polymers, there may be listed, for example, polyvinyl alcohols, sodium polyglutamates, polyacrylic acids, polyethyleneimines and polyvinyl ethers.

Any polymer appropriately selected from them can be used in the present invention. Preferred polymers are carrageenan, xanthan gum, carboxymethyl cellulose (CMC) and sodium polyglutamates. They are preferably added to a diluent *in situ* when the fatty acid type herbicide is applied. The concentration of polymer in the diluent for application is preferably in the range of from about 0.01% to about 3% in case of carrageenan, from about 0.01% to about 1% in case of xanthan gum, from about 0.01% to about 3% in case of CMC, or from about 0.01% to about 15% in case of sodium polygultamate.

Generally speaking, fatty acids are not readily soluble in water. Thus, a conventional fatty acid type herbicide is prepared in the form of a mixture with an amphiphatic substance represented by a surfactant or with a lipophilic component, and the preparations thus obtained are diluted with water when used. However, since its adherence to a weed is not sufficient in this form, the conventional herbicide must be applied in a large amounts. In contrast, the present invention employs the viscous substance such as sucrose fatty acid esters and water-soluble polymers, used in combination with the fatty acid type herbicide, to make the applied herbicide on plant leaves dry slower and to increase the wetting diffusion. As a result, the viscous substance enhances the herbicidal activities of the fatty acid type herbicide.

Following are examples which illustrate procedures, including the best mode, for practicing the invention.

These examples should not be construed as limiting. All percentages are by weight and all solvent mixture proportions are by volume unless otherwise noted.

Example 1

As the fatty acid type herbicide, preparations comprising a 60% concentration (w/v) of pelargonic acid (manufactured by Tokyo Kasei), a 35% concentration (w/v) of xylene (manufactured by Kanto Kagaku) and a 5% concentration (w/v) of Tween 80 (manufactured by Kanto Kagaku) were obtained. The fatty acid type herbicide preparations were diluted with distilled water to provide solutions having concentrations of 1.25%, 0.63% and 0.31% (w/v), respectively. Further, distilled water was provided without containing the preparations. The above concentrations of the diluents correspond to pelargonic acid concentrations (w/v) of 0.75%, 0.38% and 0.19%, respectively. Then, a sucrose fatty acid ester (DK ester F-140, manufactured by Dai-ichi Kogyo Seiyaku) or a sodium polyglutamate (manufactured by Shiguma Sha) was added to and dissolved in each solution in a concentration of 0.5% (w/v). These solution mixtures thus obtained were applied to barnyard grass (Panicum crusgalli) which had grown to 2.5-3 leaf stage, in an amount of 1.5 ml per 10 x 10 cm pot. The treated barnyard grass was raised in a greenhouse and herbicidal effects were evaluated after 7 days. The evaluation was represented by killing percentage as compared with non-treated grass, in which a non-treated area was "0" and complete killing "100", taking into consideration the growing degree, color, and the like, of grass. The results thus obtained are shown in Table 1.

Example 2

In the same manner as in Example 1, solutions of the fatty acid type herbicide preparations were diluted with distilled water to have concentrations of 1.25%, 0.63% and 0.31% (w/v), respectively, and distilled water containing no herbicide were provided. Then, carrageenan (manufactured by Wako Junyaku Kogyo) or carboxymethyl cellulose (manufactured by Wako Junyaku Kogyo) was dissolved in each solution in a concentration of 0.5% (w/v). The solution mixtures thus obtained were applied to barnyard grass (Panicum crusgalli) which had grown to 3 leaf stage, in an amount of 1.5 ml per 10 x 10 cm pot. Herbicidal effects were evaluated to the treated grass in the same manner as in Example 1. The results thus obtained are shown in Table 2.

Example 3

In the same manner as in Example 1, solutions of the fatty acid type herbicide preparations were diluted with distilled water to have concentrations of 1.25%, 0.63% and 0.31% (w/v), respectively, and distilled water containing no herbicide were provided. Then, xanthan gum (manufactured by Shiguma Sha) was dissolved in each solution in a concentration of 0.25% (w/v), and likewise, a sucrose fatty acid ester (DK ester F-140, manufactured by Dai-ichi Kogyo Seiyaku), carrageenan (manufactured by Wako Junyaku Kogyo), a carboxymethyl cellulose (manufactured by Wako Junyaku Kogyo) or a sodium polyglutamate (manufactured by Shiguma Sha) was dissolved in each solution in a concentration of 5% (w/v). The solution mixtures thus obtained were applied to foxtail (Setaria viridis) which had grown to 3-4 leaf stage, in an amount of 1.5 ml per 10 x 10 cm pot. Herbicidal effects were evaluated to the treated grass in the same manner as in Example 1. The results thus obtained are shown in Table 3.

Example 4

The same solution mixtures as prepared in Example 3 were applied to oriental senna (Cassia obtusifolia L.) which had grown to 2.5-3 leaf stage, in an amount of 1.5 ml per 10 x 10 cm pot. Herbicidal effects were evaluated to the treated plants in the same manner as in Example 1. The results thus obtained are shown in Table 4.

TABLE 1. Herbicidal Effects against Barnyard Grass

| Concentration of herbicide (w/v) | Percent killed | | | | | |
|---|---|---|---|---|---|---|
| | Control | | SE | | PGS | |
| 1.25% | 70 | 70 | 97 | 95 | 97 | 100 |
| 0.63% | 30 | 30 | 95 | 95 | 70 | 60 |
| 0.31% | 10 | 10 | 50 | 50 | 10 | 30 |
| 0% | 0 | 0 | 0 | 0 | 0 | 0 |

SE: Sucrose fatty acid ester (0.5% w/v)
PGS: Sodium polyglutamate (0.5% w/v)

TABLE 2. Herbicidal Effects against Barnyard Grass

| Concentration of herbicide (w/v) | Percent killed | | | | | |
|---|---|---|---|---|---|---|
| | Control | | CG | | CMC | |
| 1.25% | 80 | 70 | 90 | 85 | 90 | 85 |
| 0.63% | 30 | 20 | 85 | 70 | 75 | 50 |
| 0.31% | 5 | 5 | 40 | 30 | 30 | 10 |
| 0% | 0 | 0 | 0 | 0 | 0 | 0 |

CG: Carrageenan (0.5% w/v)
CMC: Carboxymethyl cellulose (0.5% w/v)

TABLE 3. Herbicidal Effects against Foxtail

| COH | Percent killed | | | | | | | | | | | |
|---|---|---|---|---|---|---|---|---|---|---|---|---|
| | Control | | XAN | | SE | | GC | | CMC | | PGS | |
| 1.25% | 85 | 75 | 90 | 80 | 90 | 95 | 99 | 98 | 95 | 90 | 95 | 95 |
| 0.63% | 20 | 15 | 50 | 50 | 70 | 75 | 85 | 90 | 70 | 75 | 60 | 60 |
| 0.31% | 5 | 0 | 5 | 10 | 20 | 30 | 50 | 50 | 20 | 10 | 5 | 10 |
| 0% | 0 | 0 | 0 | 0 | 0 | 0 | 0 | 0 | 0 | 0 | 0 | 0 |

COH: Concentration of herbicide (w/v)
XAN: Xanthan gum (0.25% w/v)
SE: Sucrose fatty acid ester (0.5% w/v)
CG: Carrageenan (0.5% w/v)
CMC: Carboxymethyl cellulose (0.5% w/v)
PGS: Sodium polyglutamate (0.5% w/v)

TABLE 4. Herbicidal Effects against Oriental Senna

| COH | Percent killed | | | | | | | | | | |
|---|---|---|---|---|---|---|---|---|---|---|---|
| | Control | | XAN | | SE | | GC | | CMC | | PGS |
| 1.25% | 95 | 85 | 70 | 75 | 90 | 90 | 99 | 98 | 99 | 98 | 90 | 90 |
| 0.63% | 20 | 20 | 70 | 75 | 90 | 95 | 80 | 75 | 90 | 85 | 50 | 60 |
| 0.31% | 5 | 0 | 10 | 5 | 20 | 10 | 5 | 5 | 30 | 20 | 10 | 10 |
| 0% | 0 | 0 | 0 | 0 | 0 | 0 | 0 | 0 | 0 | 0 | 0 | 0 |

COH: Concentration of herbicide (w/v)
XAN: Xanthan gum (0.25% w/v)
SE: Sucrose fatty acid ester (0.5% w/v)
CG: Carrageenan (0.5% w/v)
CMC: Carboxymethyl cellulose (0.5% w/v)
PGS: Sodium polyglutamate (0.5% w/v)

As seen from the tables, the fatty acid type herbicide compositions according to the present invention, e.g., containing the highly viscous substance such as sucrose fatty acid esters or water-soluble polymers, showed effective weed control at a lower concentration of the herbicide than a single use of the fatty acid herbicide itself. Accordingly, environmental pollution can be reduced. Further, the herbicidal compositions according to the present invention are easy in application and economical.

It should be understood that the examples and embodiments described herein are for illustrative purposes only and that various modifications or changes in light thereof will be suggested to persons skilled in the art and are to be included within the spirit and purview of this application and the scope of the appended claims.

## Claims

1. A fatty acid type herbicidal composition, which comprises a fatty acid type herbicide containing as an active ingredient a fatty acid having a carbon number of from 6 to 18 and at least one highly viscous substance.

2. The composition according to Claim 1, wherein the highly viscous substance is a sucrose fatty acid ester.

3. The composition according to Claim 1, wherein the highly viscous substance is a water-soluble polymer.

4. The composition according to Claim 3, wherein the water-soluble polymer is at least one member selected from the group consisting of cellulose derivatives, polypeptides, viscous substances derived from sea weed and polymers produced by microorganism.

5. The composition according to Claim 4, wherein the water-soluble polymer is a carboxymethyl cellulose.

6. The composition according to Claim 4, wherein the water-soluble polymer is a sodium polyglutamate.

7. The composition according to Claim 4, wherein the water-soluble polymer is carrageenan.

8. The composition according to Claim 4, wherein the water-soluble polymer is xanthan gum.

9. A method for weed control, which comprises applying to weed the fatty acid type herbicidal composition as set forth in any preceding claim.

European Patent
Office

**EUROPEAN SEARCH REPORT**

Application Number

EP 94 30 0138

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | WO-A-91 05472 (SAFER, INC.)<br>--- | | A01N37/02<br>A01N37/06<br>//(A01N37/02,<br>25:24,25:02),<br>(A01N37/06,<br>25:24,25:02) |
| A | EP-A-0 494 386 (MYCOGEN CORPORATION)<br>--- | | |
| A | US-A-5 037 654 (G.S.PURITCH ET. AL.)<br>--- | | |
| A | FR-A-2 451 162 (PRODUITS SANDOZ SA.)<br>----- | | |
| | | | **TECHNICAL FIELDS<br>SEARCHED** (Int.Cl.5)<br><br>A01N |

The present search report has been drawn up for all claims

| Place of search | Date of completion of the search | Examiner |
|---|---|---|
| THE HAGUE | 15 April 1994 | Donovan, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)